# EUROPÄISCHE PATENTSCHRIFT

(11) **EP 2 334 612 B1**
(45) Veröffentlichungstag und Bekanntmachung des Hinweises auf die Patenterteilung: **05.12.2012**
(21) Anmeldenummer: 09782746.3
(22) Anmeldetag: 08.09.2009
(51) Int. Cl.: C03B 27/012, C03B 27/02, C03C 17/00

(54) **VERFAHREN ZUR HERSTELLUNG VON THERMISCH GEHÄRTETEN GLÄSERN**
METHOD FOR PRODUCING THERMALLY TEMPERED GLASSES
PROCÉDÉ DE PRODUCTION DE VERRES TREMPÉS THERMIQUEMENT

(30) Priorität: 08.09.2008 DE 102008046044; 17.12.2008 DE 102008062362
(43) Veröffentlichungstag der Anmeldung: 22.06.2011
(73) Patentinhaber: TU Bergakademie Freiberg, 09599 Freiberg (DE)
(72) Erfinder: HESSENKEMPER, Heiko, 09603 Großschirma (DE); KRETZSCHMER, Michael, 09599 Freiberg (DE)
(74) Vertreter: Eisenführ, Speiser & Partner
(86) Internationale Anmeldenummer: PCT/EP2009/061611
(87) Internationale Veröffentlichungsnummer: WO 2010/026258

(56) Entgegenhaltungen:
- EP-A- 1 478 602
- EP-A- 1 549 591
- US-A1- 2001 018 836
- US-A1- 2005 175 844
- US-A1- 2006 107 696
- US-A1- 2006 179 722
- KIEFER W: "THERMISCHES VORSPANNEN VON GLAESERN NIEDRIGER WAERMEAUSDEHNUNG//THERMAL TOUGHENING OF LOW THERMAL EXPANSION GLASSES//TREMPE THERMIQUE DE VERRES A BASSE DILATION THERMIQUE" GLASTECHNISCHE BERICHTE, VERLAG DER DEUTSCHEN GLASTECHNISCHEN GESELLSCHAFT, FRANKFURT, DE, Bd. 57, Nr. 9, 1. Januar 1984 (1984-01-01), Seiten 221-228, XP001073828 ISSN: 0017-1085 in der Anmeldung erwähnt

## Beschreibung

Die Erfindung betrifft ein Verfahren nach dem Oberbegriff des Anspruchs 1.

Oberflächenveredelte Gläser spielen wirtschaftlich eine immer größere Rolle, wobei thermisch gehärtete Gläser einen wesentlichen Teil dieser Gruppe ausmachen. Diese Art der Oberflächenveredlung findet insbesondere dort eine Anwendung, wo mechanische Eigenschaften, insbesondere Festigkeiten gefordert werden, z.B. im Automobilsektor, in der Architektur und in der Nutzung der Solarenergie. Die so genannten Einscheibensicherheitsgläser (ESG) sind in einer speziellen Norm hinsichtlich ihrer Eigenschaften, Prüfmethoden etc. definiert. Diese Norm wird wiedergegeben in DIN EN 12150-1: Thermisch vorgespanntes Kalknatron-Einscheibensicherheitsglas, November 2000. Bemerkenswert ist, dass diese Norm nur für Gläser bis zu einer minimalen Dicke von 3 mm existiert. Eine Marktanalyse zeigt, dass tatsächlich ESG Gläser nur mit einer Dicke von größer gleich 2,8 mm auf dem Markt erhältlich sind. Dünne thermisch gehärtete Gläser mit Dicken deutlich unter 2,8 mm, mit gleichen oder sogar deutlich verbesserten mechanischen Eigenschaften als ESG Gläser würden eine strategische Optimierung in den verschiedensten Anwendungsfeldern zur Folge haben, von Gewichtsreduzierungen, Kostensenkungen, verbesserten Transmissionseigenschaften bis hin zu logistischen Vorteilen. Als Bestandteil von Produkten wie Verbundsicherheitsglas (VSG), Panzerglas oder Vakuumisoliergläsern sind wiederum eine große Anzahl neuer Anwendungsfelder, Märkte und Kostensenkungen vorstellbar.

Es erhebt sich daher die Frage, aus welchen Gründen diese dünnen. thermisch gehärteten Gläser mit hohen eingeprägten Druckspannungen nichtexistieren. Hierzu muss man sich den Herstellungsprozess betrachten. Die ESG Gläser werden zunächst erhitzt, bei normaler Kalk-Natron-Silikatglaszusammensetzung wie z. B. Floatg!as bis etwa 680 °C. Danach findet eine Schockkühlung mit Luftduschen statt, die zunächst die Oberfläche abkühlt, wobei mit dem Aufbau eines Temperaturgradienten zunächst an der Oberfläche Zugspannungen aufgebaut werden, die bei Abkühlung bis zur Raumtemperatur des gesamten Glaskörpers sich in Druckspannungen an der Oberfläche umwandeln. Die Prozesse sind ausführlich beschrieben und quantifiziert worden in W. Kiefer: Thermisches Vorspannen von Gläsern niedriger Wärmeausdehnung; Glastechnische Berichte 57 (1984) Nr.9, S. 221-228. Für dünnere Gläser die thermisch gehärtet werden sind zur Erlangung gleicher Druckspannungen größere Temperaturgradienten notwendig, die nur durch eine intensivere Abkühlung möglich sind. Dies ist zwar prinzipiell möglich, z. B. durch Flüssigkeitskühlung, führt aber dazu, dass die beim Abkühlen erzeugten temporären Zugspannungen an der Oberfläche zur Zerstörung des Glases führen. Zwar werden Flüssigkeitskühlungen eingesetzt z. B. bei Borosilikatgläsern, was aber nur möglich ist, da diese einen deutlich geringeren Ausdehnungskoeffizienten haben, der nur etwa 40 % eines handelsüblichen Floatglases beträgt. Damit besitzen aber die auftretenden Zugsspannungen und die eingeprägten permanenten Druckspannungen bei Raumtemperatur bei gleicher Kühlung auch nur einen entsprechend geringeren Wert. Würde man nun ein Kalk-Natron-Silikatglas stärker abkühlen, so würde der Festigkeitsverteilung einer Glascharge folgend mit steigender Abkühlgeschwindigkeit mehr und mehr Gläser während des Abkühlprozesses zerstört werden. Prinzipiell sind damit 2 mm ESG Gläser denkbar, allerdings würde nur ein Bruchteil einer Glascharge diesen Behandlungsschritt unzerstört überstehen, was die industrielle Nichtexistenz solcher Gläser bei vorhandenem starkem Marktinteresse erklärt.

Der Erfindung liegt die technische Aufgabe zugrunde, ein Verfahren zur Herstellung von thermisch gehärteten Gläsern mit Dicken kleiner 2,8 mm zu entwickeln. Die Aufgabe wird gelöst durch ein Verfahren mit den Merkmalen des Anspruchs 1.

D1 offenbart ein Verfahren zur Herstellung eines thermisch gehärteten Glases mit einer Dicke von 2,2 mm, in dem das Glas lediglich in einem zentralen Teil unter Ausnehmung eines peripheren Teils in einer ersten Verfahrensstufe erhitzt und in einer zweiten Verfahrensstufe einer Schockkühlung unterworfen wird. Eine auf den peripheren Teil beschränkte Wärmebehandlung wird mittels Laserschneiden vorgenommen. Eine auf den peripheren Teil beschränkte Schockkühlung wird mit CO₂ oder flüssigen Stickstoffdampf durchgeführt.

Die Grundidee des neuen Verfahrens beruht nun darauf, dass die thermisch zu härtenden Gläser vor oder während des Aufheizprozesses Verfahren ausgesetzt werden, die die Festigkeit von Gläsern erhöhen.

Hierzu eignen sich im Rahmen von Weiterbildungen der Erfindung die auf dem Markt befindlichen Lasertrennverfahren, die die Biegefestigkeit um mehr als 100 % erhöhen und die von den Kanten ausgehenden Bruchursachen verringern. Ergänzend oder alternativ kann eine Flammenpolitur vorgenommen werden oder eine Behandlung mit AlCl₃, wie sie in WO 2004/096724 A1 offenbart ist, deren Offenbarungsgehalt hiermit durch Zitat in den Offenbarungsgehalt der vorliegenden Anmeldung aufgenommen ist.. Die so erreichten Festigkeitssteigerungen ermöglichen nun höhere Zugspannungsbeanspruchungen währen der Abkühlphase, damit einen höheren Temperaturgradienten und damit letztlich entweder höhere Druckspannungen bei gleicher Dicke oder gleiche Druckspannungen bei geringerer Dicke bzw. eine Kombination aus beiden Eigenschaftsverbesserungen. Erreicht werden kann dies durch eine Schockkühlung mit Medien, die einen Wärmeübergangskoeffizienten in der Anwendung von größer 400 W/m²K haben. Verschiedene Kühlmethoden sind in W. Kiefer: Thermisches Vorspannen von Gläsern niedriger Wärmeausdehnung; Glastechnische Berichte 57 (1984) Nr.9, S. 221-228 beschrieben, die einzeln oder in Kombination angewendet werden können, wobei der Offenbarungsgehalt von W. Kiefer: Thermisches Vorspannen von Gläsern niedriger Wärmeausdehnung; Glastechnische Berichte 57 (1984) Nr.9, S. 221-228 hiermit durch Zitat in den Offenbarungsgehalt der Anmeldung aufgenommen wird.

Diese Methode, aufbauend auf vorgeschalteten Maßnahmen zur Festigkeitssteigerung ist für beliebige Glaszusammensetzungen möglich, wobei die Abkühlrate ausgehend von dem ursprünglichen Ausdehnungskoeffizienten jeweils in dem Maße gesteigert werden kann, indem die kurzzeitige Zugfestigkeitssteigerung während des Abkühlvorgangs wirksam ist.

Die Möglichkeit zum thermischen Härten von Kalk-Natron-Silikatgläsern nun Flüssigphasen einzusetzen, birgt neben einer erheblichen Kosteneinsparung weitere Vorteile in sich. Häufig sind Oberflächenveredelungen erwünscht, z. B. hinsichtlich der optischen Eigenschaften und der chemischen Beständigkeit. Dies kann bekannterweise dauerhaft durch eine Anreicherung von Si0₂ an der Oberfläche erreicht werden, wobei mit dem verringertem Brechungsindex die Reflexionsverluste verringert werden und die Transmission erhöht wird bei gleichzeitiger Steigerung der chemischen Beständigkeit. Dies kann durch zwei prinzipielle Maßnahmen erreicht werden:
1.) Eine Abreicherung anderer Elemente, z. B. eine Entalkalisierung. Beispiel: Durch eine Kühlung mit einer 3% (Gewicht) Ammoniumsulfat Lösung kann die hydrolytische Beständigkeit verdoppelt werden bei gleichzeitiger Verbesserung der Transmission um 0,5 % auf Kosten der Reflexion.
2.) Eine Zuführung von Si0₂ Suspension mit der wässrigen Lösung während der Kühlung, wobei die aus der Sol-Gel Technologie bekannten Lösungen benutzt werden können, um eine zusätzliche Eigenschaftsoptimierung hinsichtlich mechanischer, chemischer und optischer Eigenschaften zu erreichen.

Dieser reaktive Dünnschichtfilmauftrag wird dabei mit der Methode des thermischen Härtens kombiniert, ermöglicht durch die Nutzung flüssiger Phasen zur Abkühlung von Gläsern auch mit hohem Ausdehnungskoeffizienten, was wiederum erst durch die Anwendung Festigkeit steigernder Maßnahmen ermöglicht wird.

Eine besonders bevorzugte Weiterbildung führt auf eine weitere Ausgestaltung des Verfahrens zur Herstellung von thermisch gehärteten Gläsern nach dem Konzept der Erfindung oder einer oben erläuterten Weiterbildung desselben.

Dem oben erläuterten Konzept liegt insbesondere die Aufgabe zugrunde, ein Verfahren zur Herstellung von thermisch gehärteten Gläsern mit Dicken kleiner 2,8 mm zu entwickeln. Die Grundidee beruht darauf, dass die thermisch zu härtenden Gläser vor oder während des Aufheizprozesses Verfahren ausgesetzt werden, die die Festigkeit von Gläsern erhöhen. Hierzu eignen sich die auf dem Markt befindlichen Lasertrennverfahren, die die Biegefestigkeit um mehr als 100 % erhöhen und die von den Kanten ausgehenden Bruchursachen verringern. Ergänzend oder alternativ kann eine Flammenpolitur vorgenommen werden oder eine Behandlung mit AlCl₃. Die so erreichten Festigkeitssteigerungen ermöglichen nun höhere Zugspannungsbeanspruchungen währen der Abkühlphase, damit einen höheren Temperaturgradienten und damit letztlich entweder höhere Druckspannungen bei gleicher Dicke oder gleiche Druckspannungen bei geringerer Dicke bzw. eine Kombination aus beiden Eigenschaftsverbesserungen. Erreicht wird dies durch eine Schockkühlung mit Medien, die einen Wärmeübergangskoeffizienten in der Anwendung von größer 400 W/m²K haben.

Es wurde weiterbildend erkannt, dass eine Schockkühlung mit flüssigen Medien bezüglich einer gesteuerten Abkühlung schwierig handhabbar ist, so dass ein Sicherheitsbereich zur Vermeidung von Glasbruch eingehalten werden muss. Durch die Aufheiz- und Kühlprozesse ist die Herstellung von thermisch gehärteten Gläsern energetisch aufwändig.

Der besonders bevorzugten Weiterbildung liegt die Aufgabe zugrunde, das Verfahren nach dem Konzept der Erfindung so weiter zu gestalten, dass thermisch gehärtete Gläser mit einem geringeren Energieaufwand unter Ausnutzung einer gesteuerten Schockkühlung produziert werden können.

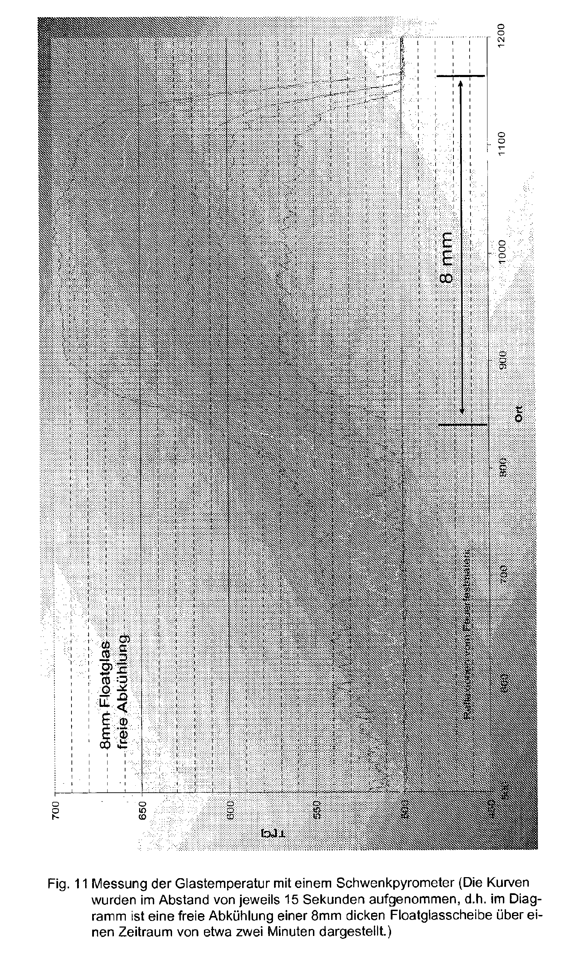

Weiterbildend wird diese Aufgabe dadurch gelöst, dass die Gläser kalt in einen Plattenkühler mit Heizmöglichkeit eingelegt, auf eine Temperatur größer als die Transformationstemperatur des Glases erhitzt werden, wobei die mit dem Glas in Kontakt stehenden Werkstoffoberflächen eine maximale Temperatur haben dürfen, bei der das Glas eine Viskosität von> 10^{8,5} Pas hätte, anschließend einer gesteuerten Abkühlung unterworfen und dem Plattenkühler kalt entnommen werden. Der eingesetzte Plattenkühler kann aus unterschiedlichen Metallen, z. B. Cu, Al, Stahl und anderen, auch Legierungen, bestehen. Dieser Plattenkühler sollte eine Erwärmungs- und Kühlmöglichkeit besitzen, um für unterschiedliche Gläser (chemische Zusammensetzung; Dicke) den jeweils benötigten Temperaturgradienten im Glas einstellen zu können. Das Material sollte neben einer entsprechenden Wärmeeindringzahl auch den permanenten Temperaturwechseln formstabil entgegentreten. Entweder als monolithisches Material oder als Materialkombination, z. B. als Klammer um das Basismaterial. Die gesteuerte Abkühlung wird dadurch erreicht, dass während des Abkühlvorganges die Temperaturdifferenzen zwischen Glasoberfläche und Glasmitte gemessen und diese Größe zur Steuerung des Abkühlvorganges genutzt wird. Die Oberflächentemperatur kann mittels Thermoelemente in der Oberfläche des Plattenkühlers oder mittels einer Pyrometermessung im Bereich von 5 µm festgestellt werden. Mit einem fokussierten hochauflösenden Pyrometer, das seitlich über die Glasdicke hin und her bewegt wird, kann eine maximale Temperatur während der Kühlung identifiziert werden, bzw. ein Temperaturprofil über den Querschnitt ermittelt werden. Die Glasplatte stellt in ihrer Dicke einen schwarzen Strahler dar, so dass unter der Annahme einer stabilen Temperaturverteilung über die Dicke, stabil über die ganze Fläche die Innentemperatur während des gesamten Abkühlprozesses gemessen werden kann. Ergebnisse der Schwenkpyrometermessungen an einer 8 mm Floatglasscheibe sind in der Zeichnung (Fig. 11) dargestellt. Die gemessene Innentemperatur kann zur Steuerung des Kühlprozesses verwendet werden.

Der einzubringende Temperaturgradient richtet sich nach der Dicke des Glases und den temperaturabhängigen glasspezifischen Eigenschaften wie Ausdehnungskoeffizient, effektive Wärmeleitfähigkeit, elastische Größen. Zur Steuerung des Wärmeübergangs und mit dem Ziel eines gleichmäßigen Kontakts kann sich die Verwendung von speziellen "Schmiermitteln" empfehlen, die möglichst parallel eine Veredelung der Glasoberflächen ermöglichen, z. B. Aluseifen, entalkalisierende Stoffe, etc (Beispiel: Sulfate (Ammoniumsulfat) oder Chloride (Aluminiumchlorid)). Als Kühl- und Beheizungsmethoden kommen direkte und indirekte Methoden zur Anwendung, (Widerstandsheizung, induktive Erwärmung, Flammenbeheizung. Kühlung: Wasser, Salze (Nutzung der Aggregatsumwandlungswärme), Luftkühlung und Kombinationen der verschiedenen Methoden.

Die Plattenkühlung eliminiert durch eine erzwungene parallele Formgebung das Welligkeitsproblem für dünne Glasscheiben. Mit flexiblen Platten ist eine Formgebung möglich, bevor das thermische Härten durch Kühlung einsetzt. Dadurch werden nicht planare Geometrien mit einer thermischen Härtung möglich.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgen für identische oder ähnliche Teile oder Teile, die identische oder ähnliche Funktionen haben, gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnungen; diese zeigen in
Fig. 1 ein Schadensbild einer 4 mm dicken Glasscheibe, die im Rahmen einer bevorzugten Ausführungsform des Verfahrens nach Beispiel 1 behandelt wurde;
Fig. 2 ein Schadensbild einer 2 mm dicken Glasscheibe, die im Rahmen einer bevorzugten Ausführungsform des Verfahrens nach Beispiel 2 behandelt wurde;
Fig. 3 ein Schadensbild einer 2 mm dicken Glasscheibe, die im Rahmen einer bevorzugten Ausführungsform des Verfahrens nach Beispiel 3 behandelt wurde;
Fig. 4 eine schematische Skizze mit Erläuterung einer Anlage eines Plattenheizers bzw. Plattenkühlers für eine Ausführungsform der besonders bevorzugten Weiterbildung des Verfahrens;
Fig. 5 eine schematische Skizze mit Erläuterung einer Tandemanlage für eine Ausführungsform der besonders bevorzugten Weiterbildung des Verfahrens;
Fig. 6 Bruchbilder von Scheiben mit Erläuterungen, die gemäß einer Ausführungsform der besonders bevorzugten Weiterbildung des Verfahrens unter Kontaktkühlung behandelt wurden;
Fig. 7 ein Bruchbild einer Scheibe mit Erläuterung im Vergleich 4 mm (links) und 2 mm (rechts) nach thermischem Härten und/oder Kontaktkühlung gemäß einer Ausführungsform der besonders bevorzugten Weiterbildung des Verfahrens;
Fig. 8 Bruchbilder von Scheiben mit Erläuterung, die gemäß einer Ausführungsform der besonders bevorzugten Weiterbildung des Verfahrens mit Kontaktkühlung behandelt wurden;
Fig. 9 ein Spannungsprüfbild einer 2 mm Scheibe mit Erläuterung, die gemäß einer Ausführungsform der besonders bevorzugten Weiterbildung des Verfahrens unter Kontaktkühlung behandelt wurde;
Fig. 10 ein Spannungsprüfbild mit Erläuterung einer konventionell behandelten Autoglasscheibe;
Fig. 11 Ergebnisse mit Erläuterung einer Schwenkpyrometermessung an einer 8 mm Floatingglasscheibe, die gemäß einer Ausführungsform der besonders bevorzugten Weiterbildung des Verfahrens behandelt wurde.

Das Verfahren gemäß dem Konzept der Erfindung soll anhand folgender Beispiele erläutert werden.

### Beispiel 1

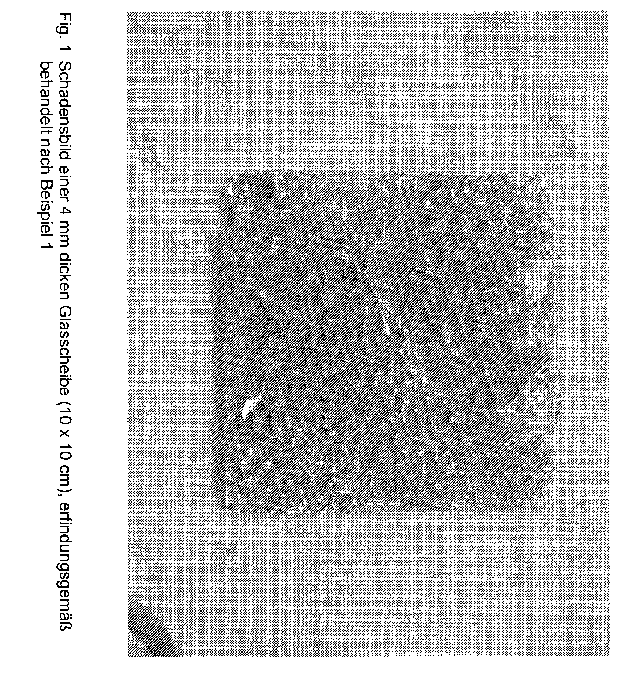

Eine Floatglasscheibe auf kommerzieller Kalknatronsilikatglasbasis mit einer Dicke von 4 mm, zugeschnitten durch Lasertrennung, wird auf eine integrale Temperatur vom 680 °C aufgeheizt und nach dem Herausfahren aus dem Ofen mittels Sprühkühlung für maximal 30 Sekunden mit 1 I/Minute auf einer Fläche von 2 mal 100 cm² beidseitig abgekühlt. Unter Verwendung eines genormten kommerziell erhältlichen Schlagkömers wird das in Fig. 1 dargestellte Fehlbild erhalten. Eine nichtdurch Lasertrennung zugeschnittene vergleichbare Floatglasscheibe ging bei der Sprühkühlung zu Bruch.

### Beispiel 2

Eine Floatglasscheibe auf kommerzieller Kalknatronsilikatglasbasis mit einer Dicke von 2 mm, zugeschnitten durch Lasertrennung, wird auf eine integrale Temperatur vom 680 °C aufgeheizt und nach dem Herausfahren aus dem Ofen mittels Sprühkühlung für maximal 30 Sekunden mit 2 I/Minute auf einer Fläche von 2 mal 100 cm² beidseitig abgekühlt.

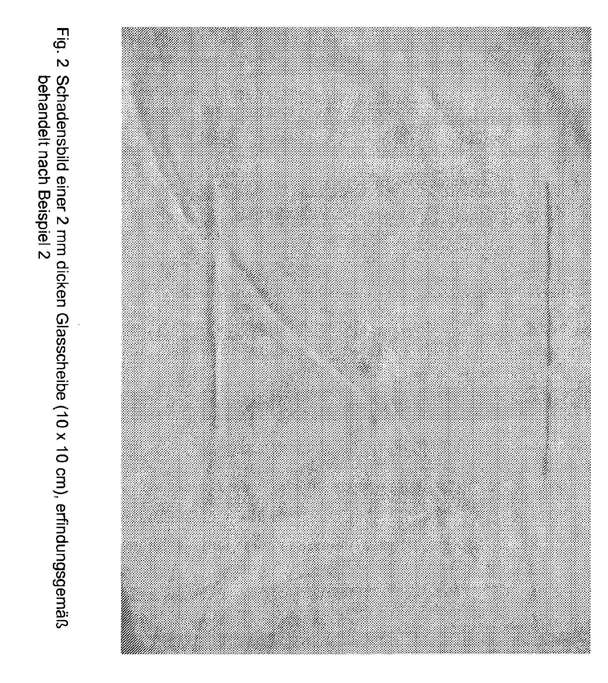

Unter Verwendung eines genormten kommerziell erhältlichen Schlagkörners wird das in Fig. 2 dargestellte Fehlbild erhalten. Eine nicht durch Lasertrennung zugeschnittene vergleichbare Floatglasscheibe ging bei der Sprühkühlung zu Bruch.

### Beispiel 3

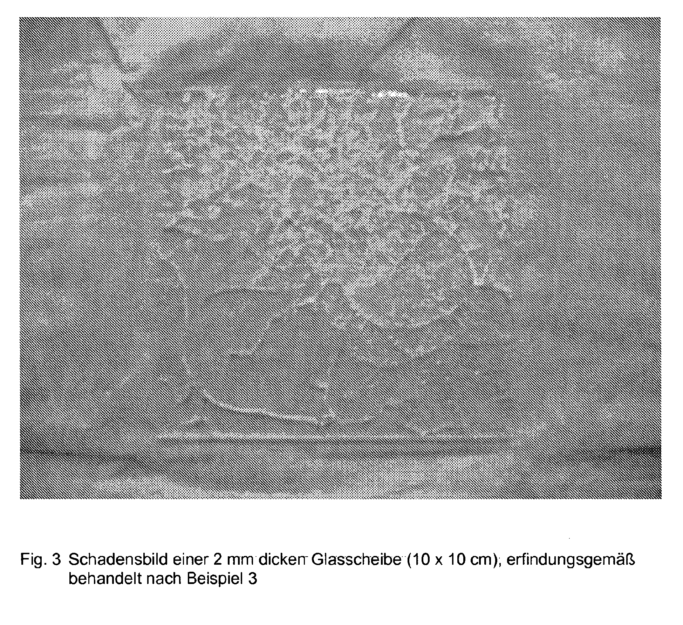

Eine Floatglasscheibe auf kommerzieller Kalknatronsilikatglasbasis mit einer Dicke von 2 mm, zugeschnitten durch Lasertrennung, wird auf eine integrale Temperatur vom 680 °C aufgeheizt. Mit der Aufheizung erfolgt gleichzeitig eine Behandlung mit Aluminiumchlorid. Nach dem Herausfahren des Glases aus dem Ofen wird mittels Sprühkühlung für maximal 30 Sekunden mit 4 I/Minute auf einer Fläche von 2 mal 100 cm² beidseitig abgekühlt. Unter Verwendung eines genormten kommerziell erhältlichen Schlagkörners wird das in Fig. 3 dargestellte Fehlbild erhalten. E:ine nicht durch Lasertrennung zugeschnittene vergleichbare Floatglasscheibe ging bei der Sprühkühlung zu Bruch.

Die folgenden Beispiele erläutern das Verfahren gemäß der besonders bevorzugten Weiterbildung der Erfindung.

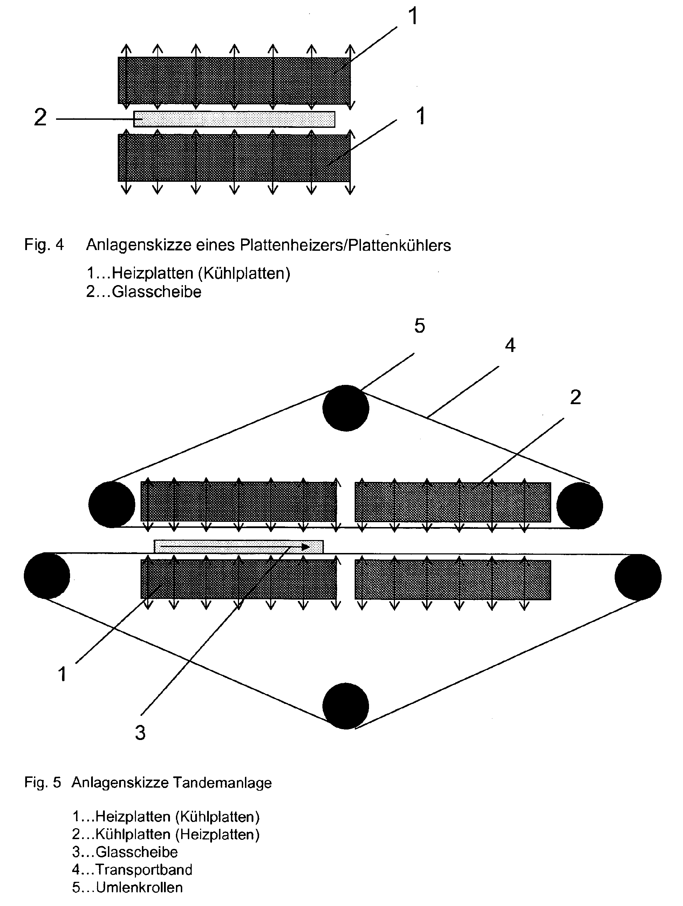

Fig. 4 zeigt das Prinzip einer Anlage zum thermischen Härten nach dem erfindungsgemäßen Verfahren. Besonders vorteilhaft ist die Ausgestaltung des Verfahrens in der Weise, dass zwei Plattenkühler durch wechselseitiges Kühlen und Heizen unter Einbinden eines Wärmeträgers und Speichers als Tandemanlage kombiniert werden. Wird Anlage A gekühlt wird mit diesem Medium Anlage B geheizt und umgekehrt. Das Prinzip ist in Fig. 5 dargestellt.

### Beispiel 4

Eine Floatglasscheibe auf kommerzieller Kalknatronsilikatglasbasis mit einer Dicke von 4 mm, zugeschnitten durch Lasertrennung auf eine Größe von 100 mm x 100 mm, wurden auf einer feuerfesten Unterlage in einem Muffelofen mit einer Ofentemperatur von 750 °C vier Minuten lang erwärmt. Eine Messung mit einem Thermoelement zwischen der Unterlage und der Scheibe machte deutlich, dass die Temperatur der Scheibe mindestens 700 °C erreicht hatte. Nach der Erwärmung der Scheibe wurde sie mit der Unterlage aus dem Ofen gezogen und zwischen die Kühlplatten geschoben. Dieser Vorgang muss, um möglichst wenig Wärme zu verlieren, sehr schnell gehen. Bei den durchgeführten Versuchen war die Zeitaufwendung zwischen der Position der Scheibe im Ofen und der Position zwischen den Kühlplatten weniger als vier Sekunden. Die Verweildauer zwischen den Kühlplatten war bei den 2 mm starken Scheiben 2 Minuten.

Bei den Laborversuchen wurden Kühlplatten aus zwei verschiedenen Materialien eingesetzt, Graphit und Stahl. Die Stahlplatten wurden auf eine Temperatur von etwa 90 °C aufgeheizt, um den Wärmeübergang vom Glas in die Kühlplatte nicht zu extrem werden zu lassen. Die Graphitplatten wurden nicht separat aufgeheizt, sondern erwärmten sich während weniger Versuchsdurchgänge von selbst recht gut. Um eine möglichst gute Oberflächenqualität der Scheiben und einen guten Kontakt des Glases zu den Platten sicherzustellen, waren die Kühlplatten (Graphit und Stahl) einseitig geschliffen bzw. poliert. Einige Scheiben wurden mit einem Federkörner zerstört, um das Bruchbild zu beurteilen. Dabei wurde eine Fehlstelle genau mittig in die Scheibe eingebracht.

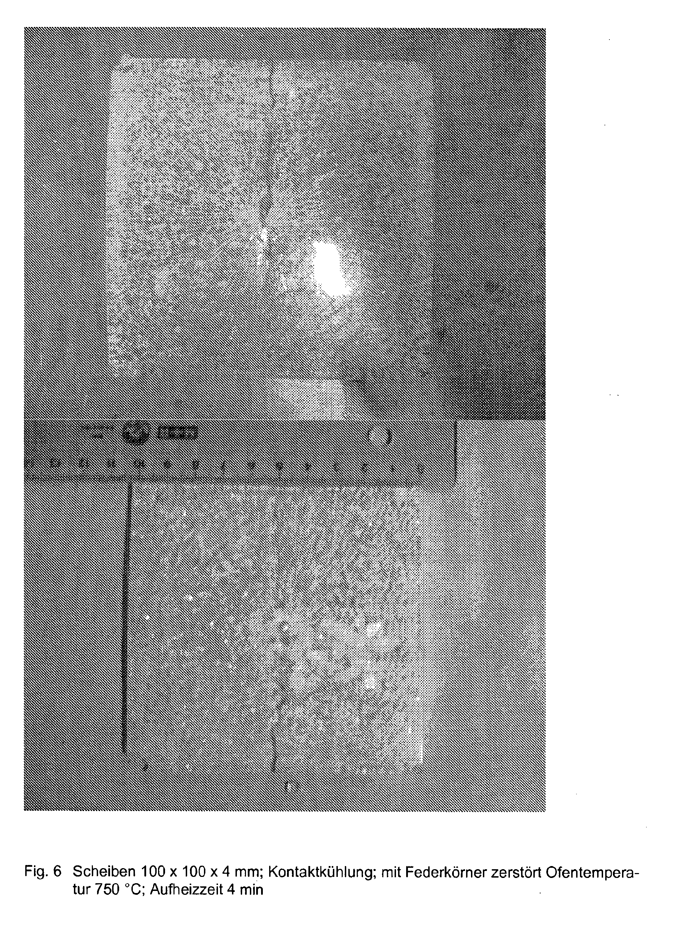

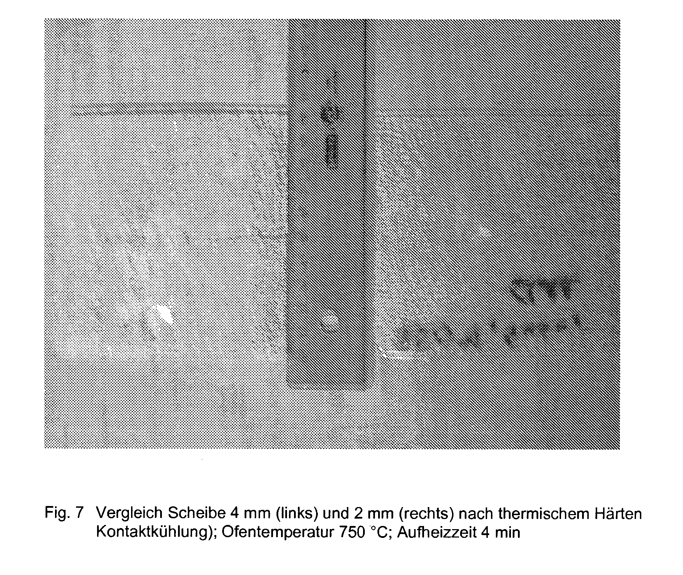

Die erhaltenen Bruchbilder (Fig. 6 und Fig. 7) waren deutlich besser, als in der DIN für Einscheibensicherheitsglas vorgeschrieben (DIN 12150; Thermisch vorgespanntes Kalknatron- Einscheibensicherheitsglas (ESG)).

### Beispiel 5:

Eine Floatglasscheibe auf kommerzieller Kalknatronsilikatglasbasis mit einer Dicke von 2 mm wurde analog Beispiel 4 behandelt. Die Kühlplatten aus Stahl wurden dabei auf eine Temperatur von 80 oe aufgeheizt. Einige Scheiben wurden mit einem Federkörner zerstört, um das Bruchbild zu beurteilen. Dabei wurde eine Fehlstelle genau mittig in die Scheibe eingebracht.

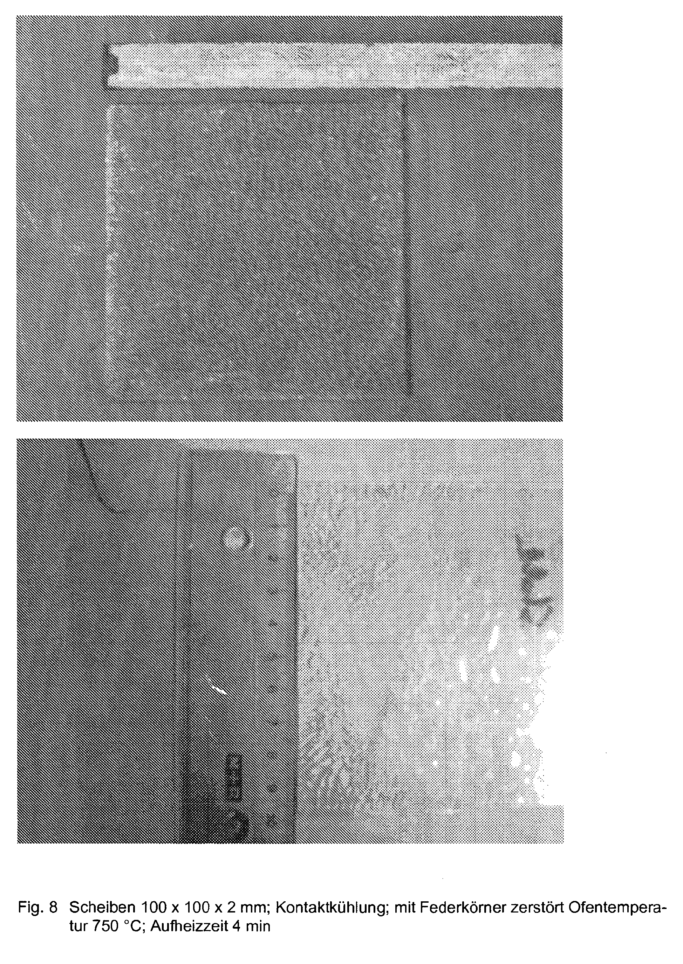

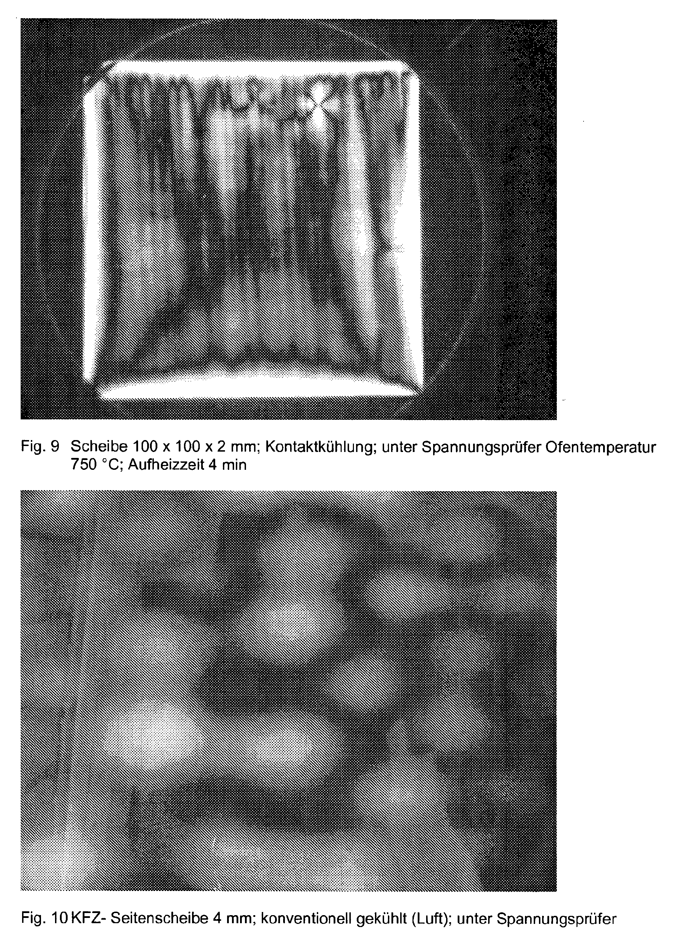

Die erhaltenen Bruchbilder (Fig. 7 und Fig. 8) waren deutlich besser, als in der DIN für Einscheibensicherheitsglas vorgeschrieben (DIN 12150; Thermisch vorgespanntes Kalknatron- Einscheibensicherheitsglas (ESG)). Fig. 9 zeigt ein Spannungsprüfbild einer 2 mm Scheibe. Als Vergleichsbild zeigt Fig. 10 das Spannungsprüfbild einer konventionell behandelte Autoglasscheibe

### Beispiel 6:

Um die Scheiben einer chemischen Veredlung zu unterziehen, wurden zum einen die Kühlplatten mit einer Aluminiumseife bestrichen, zum anderen wurde dem Muffelofen Ammoniumsulfat zugegeben. Diese Möglichkeiten wurden gesondert ausprobiert, aber auch miteinander kombiniert. Um das Behandlungsergebnis zu beurteilen wurde die hydrolytische Beständigkeit der Gläser bestimmt. Die Testbedingungen waren: 48 h bei 90 °C im Trockenschrank. Eine hohe Leitfähigkeit bedeutet eine schlechte chemische Beständigkeit. Es wurden folgende Ergebnisse erzielt:

| Behandlung | Leitfähigkeit in µS/cm |
|---|---|
| keine | 12,7 |
| keine | 17,2 |
| keine | 14,0 |
| Aluminiumseife | 6,1 |
| Aluminiumseife | 7,5 |
| Aluminiumseife | 6,6 |
| (NH₄)₂SO₄ | 9,7 |
| (NH₄)₂SO₄ | 8,5 |
| Aluminiumseife + (NH₄)₂SO₄ | 6,2 |
| Aluminiumseife + (NH₄)₂SO₄ | 6,3 |
| Aluminiumseife + (NH₄)₂SO₄ | 4,1 |
| Aluminiumseife + (NH₄)₂SO₄ | 5,1 |

Es ist zu erkennen, dass die Leitfähigkeit durch die Behandlung deutlich abnimmt.

## Patentansprüche

1. Verfahren zur Herstellung eines thermisch gehärteten Glases, indem das Glas als Scheibe einer Dicke kleiner 2,8 mm in einer ersten Verfahrensstufe erhitzt und in einer zweiten Verfahrensstufe einer Schockkühlung unterworfen wird, wobei vor oder während der ersten Verfahrensstufe Maßnahmen ergriffen werden, die die Festigkeit des Glases erhöhen, und In der zweiten Verfahrensstufe die Schockkühlung mit Medien durchgeführt wird, die einen Wärmeübergangskoeffizienten in der Anwendung von großer 400 W/m²K haben , wobei vor oder während der ersten Verfahrensstufe das Glas einem Lasertrennverfahren und/oder einer Flammenpolitur und/oder einer Behandlung mit AlCl₃ unterworfen wird und **dadurch gekennzeichnet, dass**
(a) in der zweiten Verfahrensstufe die Schockkühlung unter Verwendung flüssiger Phasen mittels Sprühkühlung durchgeführt wird und/oder
(b) in der zweiten Verfahrensstufe das Glas einer gesteuerten Abkühlung unter Kontaktkühlung in einem Plattenkühler unterworfen und dem Plattenkühler kalt entnommen wirt.

2. Verfahren nach Anspruch 1, **dadurch gekennzeichnet, dass** das Glas als Floatglas zur Verfügung gestellt wird.

3. Verfahren nach einem der Ansprüche 1 oder 2, **dadurch gekennzeichnet, dass** das Glas vollständig behandelt wird.

4. Verfahren nach Anspruch 3, **dadurch gekennzeichnet, dass** für das Glas die Festigkeit integral erhöht wird.

5. Verfahren nach Anspruch 3 , **dadurch gekennzeichnet, dass** die Schockkühlung für das Glas flächig an einer Glasoberfläche durchgeführt wird.

6. Verfahren nach einem der Ansprüche 1 bis 5, **dadurch gekennzeichnet, dass** das Glas auf Kalk-Natron-Silikat-Basis gebildet wird.

7. Verfahren nach einem der Ansprüche 1 bis 6, **dadurch gekennzeichnet, dass** die Schreibe eine Dicke kleiner oder gleich 2 mm hat.

8. Verfahren nach einem der Ansprüche 1 bis 7, **dadurch gekennzeichnet, dass** in der zweiten Verfahrensstufe die Schockkühlung mit einer Ammoniumsulfatlösung durchgeführt wird.

9. Verfahren nach einem der Ansprüche 1 bis 7, **dadurch gekennzeichnet, dass** in der zweiten Verfahrensstufe die Schockkühlung mit schwefliger Säure durchgeführt wird.

10. Verfahren nach einem der Ansprüche 1 bis 7, **dadurch gekennzeichnet, dass** in der zweiten Verfahrensstufe die Schockkühlung mit einer wässrigen SiO₂ - Suspension durchgeführt wird.

11. Verfahren nach Anspruch 1, **dadurch gekennzeichnet, dass** der Plattenkühler Kühlplatten aus Graphit oder Metall hat, insbesondere einem Metall ausgewählt aus der Gruppe bestehend aus: Kupfer, Aluminium, Stahl oder Legierungen daraus.

12. Verfahren nach Anspruch 1 oder 11, **dadurch gekennzeichnet, dass** das Glas kalt in einen Plattenkühler mit Heizmöglichkeit eingelegt, auf eine Temperatur größer als die Transformationstemperatur des Glases erhitzt wird, wobei die mit dem Glas in Kontakt stehenden Werkstoffoberflächen eine maximale Temperatur haben dürfen, bei der das Glas eine Viskosität von größer 108,5 Pas hätte.

13. Verfahren nach einem der Ansprüche 1, 11 oder 12, **dadurch gekennzeichnet, dass** während des Abkühlvorganges die Temperaturdifferenzen zwischen Glasoberfläche und Glasmitte gemessen und diese Größe zur Steuerung des von der Glasdicke und der Art des Glases abhängigen Abkühlvorganges genutzt wird.

14. Verfahren nach Anspruch 13, **dadurch gekennzeichnet, dass** eine Oberflächentemperatur das Glases mittels eines Thermoelements in einer Oberfläche des Plattenkühlers oder mittels eines Pyrometers, insbesondere im Bereich von 5 µm, festgestellt wird. und/oder mit einem fokussierten hochauflösenden Pyrometer, das seitlich über die Glasdicke hin und her bewegt wird, ein Temperaturprofil über einen Querschnitt des Glases ermittelt wird.

15. Verfahren nach einem der Ansprüche 1 oder 11 bis 14, **dadurch gekennzeichnet, dass** im Plattenkühler Schmiermittel eingesetzt werden.

16. Verfahren nach Anspruch 15, **dadurch gekennzeichnet, dass** als Schiermittel Aluseifen und entalkallsierende Stoffe wie Ammoniumsulfat oder Aluminiumchlorid eingesetzt werden.

17. Verfahren nach einem der Ansprüche 1 oder 11 bis 16, **dadurch gekennzeichnet, dass** zwei Plattenkühler durch wechselseitiges Kühlen und Heizen unter Einbinden eines Wärmeträgers und Speichers als Tandemanlage kombiniert werden.

## Claims

1. Process for producing a thermally cured glass, by heating the glass in a first process step as a sheet with a thickness of less than 2.8 mm and in a second process step subjecting it to shock cooling, while before and during the first process step measures are taken that increase the strength of the glass, and in the second process step the shock cooling is carried out with media that have a heat transfer coefficient in use of more than 400 W/m²K, while before or during the first process step the glass is subjected to a laser cutting process and/or flame polishing and/or treatment with AlCl₃ and **characterised in that**
(a) in the second process step the shock cooling is carried out by spray cooling using liquid phases and/or
(b) in the second process step the glass is subjected to controlled cooling including contact cooling in a plate cooler and is taken out of the plate cooler cold.

2. Process according to claim 1, **characterised in that** the glass is provided as float glass.

3. Process according to one of claims 1 or 2, **characterised in that** the glass is treated in its entirety.

4. Process according to claim 3, **characterised in that** the strength is integrally increased for the glass.

5. Process according to claim 3, **characterised in that** the shock cooling for the glass is carried out over the area of a glass surface.

6. Process according to one of claims 1 to 5, **characterised in that** the glass is formed on a lime-soda-silicate basis.

7. Process according to one of claims 1 to 6, **characterised in that** the sheet has a thickness of less than or equal to 2 mm.

8. Process according to one of claims 1 to 7, **characterised in that** in the second process step the shock cooling is carried out with an ammonium sulphate solution.

9. Process according to one of claims 1 to 7, **characterised in that** in the second process step the shock cooling is carried out with sulphurous acid.

10. Process according to one of claims 1 to 7, **characterised in that** in the second process step the shock cooling is carried out with an aqueous SiO₂ suspension.

11. Process according to claim 1, **characterised in that** the plate cooler has cooling plates of graphite or metal, particularly a metal selected from among copper, aluminium, steel or alloys thereof.

12. Process according to claim 1 or 11, **characterised in that** the glass is placed cold in a plate cooler with a heating function, heated to a temperature above the transition temperature of the glass, while the surfaces of material that are in contact with the glass may have a maximum temperature at which the glass would have a viscosity of more than 108.5 Pas.

13. Process according to one of claims 1, 11 or 12, **characterised in that** during the cooling process the temperature differences between the glass surface and the centre of the glass are measured and this value is used to control the cooling process that is dependent on the thickness of the glass and the type of glass.

14. Process according to claim 13, **characterised in that** a surface temperature of the glass is detected by means of a thermocouple in a surface of the plate cooler or by means of a pyrometer, particularly in the range of 5 µm, and/or a temperature profile over a cross-section of the glass is determined with a focused high-resolution pyrometer which is moved back and forth laterally across the thickness of the glass.

15. Process according to one of claims 1 or 11 to 14, **characterised in that** lubricants are used in the plate cooler.

16. Process according to claim 15, **characterised in that** aluminium soaps and dealkalising substances such as ammonium sulphate or aluminium chloride are used as the lubricants.

17. Process according to one of claims 1 or 11 to 16, **characterised in that** two plate coolers are combined as a tandem apparatus by alternate cooling and heating, with a heat carrier and store attached.

## Revendications

1. Procédé de fabrication d'un verre trempé thermiquement, dans lequel le verre en tant que plaque d'une épaisseur inférieure à 2,8 mm est chauffé lors d'une première étape de procédé et est soumis lors d'une deuxième étape de procédé à un refroidissement ultra rapide, sachant que sont prises avant ou pendant la première étape de procédé des mesures qui améliorent la résistance du verre et que le refroidissement ultra rapide est effectué lors de la deuxième étape de procédé avec des milieux qui présentent un coefficient de transfert de chaleur en utilisation supérieur à 400 W/m²K, sachant que le verre est soumis avant ou pendant la première étape de procédé à un procédé de coupe par laser et/ou à un polissage à la flamme et/ou à un traitement avec de l'AlCl₃, **caractérisé en ce que**
a) le refroidissement ultra rapide est effectué lors de la deuxième étape de procédé en utilisant des phases liquides au moyen d'un refroidissement par arrosage et/ou
b) le verre est soumis lors de la deuxième étape de procédé à un refroidissement commandé par refroidissement par contact dans un refroidisseur à plaques et est prélevé à froid du refroidisseur à plaques.

2. Procédé selon la revendication 1, **caractérisé en ce que** le verre est proposé comme du verre flotté.

3. Procédé selon l'une quelconque des revendications 1 ou 2, **caractérisé en ce que** le verre est complètement traité.

4. Procédé selon la revendication 3, **caractérisé en ce que** la résistance pour le verre est intégralement améliorée.

5. Procédé selon la revendication 3, **caractérisé en ce que** le refroidissement ultra rapide pour le verre est effectué de façon planaire au niveau d'une surface de verre.

6. Procédé selon l'une des revendications 1 à 5, **caractérisé en ce que** le verre est formé sur une base de silice-chaux-soude.

7. Procédé selon l'une des revendications 1 à 6, **caractérisé en ce que** la plaque présente une épaisseur inférieure ou égale à 2 mm.

8. Procédé selon l'une des revendications 1 à 7, **caractérisé en ce que** le refroidissement ultra rapide est effectué lors de la deuxième étape de procédé avec une solution de sulfate d'ammonium.

9. Procédé selon l'une des revendications 1 à 7, **caractérisé en ce que** le refroidissement à froid est effectué lors de la deuxième étape de procédé avec de l'acide sulfurique.

10. Procédé selon l'une des revendications 1 à 7, **caractérisé en ce que** le refroidissement ultra rapide est effectué lors de la deuxième étape de procédé avec une suspension SIO₂ aqueuse.

11. Procédé selon la revendication 1, **caractérisé en ce que** le refroidisseur à plaques comporte des plaques de refroidissement en graphite ou en métal, en particulier en un métal choisi parmi le groupe constitué de : cuivre, aluminium, acier ou des alliages de ces ceux-ci.

12. Procédé selon la revendication 1 ou 11, **caractérisé en ce que** le verre est déposé à froid dans un refroidisseur à plaques avec une possibilité de chauffage, est chauffé à une température supérieure à la température de transformation du verre, sachant que les surfaces de matériaux en contact avec le verre doivent présenter une température maximale pour laquelle le verre présenterait une viscosité supérieure à 108,5 Pas.

13. Procédé selon l'une des revendications 1, 11 ou 12, **caractérisé en ce que** lors de l'opération de refroidissement, les différences de température entre la surface du verre et le centre du verre sont mesurées, et **en ce que** cette valeur est utilisée aux fins de commander l'opération de refroidissement en fonction de l'épaisseur du verre et du type de verre.

14. Procédé selon la revendication 13, **caractérisé en ce qu'**une température de surface du verre est constatée au moyen d'un thermoélément dans une surface du refroidisseur à plaques ou au moyen d'un pyromètre, en particulier dans la plage de 5 µm et/ou avec un pyromètre à haute résolution mis au point, qui effectue des mouvements de va-et-vient latéralement sur l'épaisseur de verre, et **en ce qu'**un profil de température est déterminé sur une section transversale du verre.

15. Procédé selon l'une des revendications 1 ou 11 à 14, **caractérisé en ce qu'**on emploie du lubrifiant dans le refroidisseur à plaques.

16. Procédé selon la revendication 15, **caractérisé en ce qu'**on utilise comme lubrifiants des savons d'aluminium et des substances désalcalinisantes comme le sulfate d'ammonium ou le chlorure d'aluminium.

17. Procédé selon l'une des revendications 1 ou 11 à 16, **caractérisé en ce que** deux refroidisseurs à plaques sont combinés comme une installation tandem par refroidissement mutuel et chauffage mutuel en intégrant un caloporteur et un accumulateur.
